# EUROPEAN PATENT SPECIFICATION

(11) **EP 3 892 931 B1**
(45) Date of publication and mention of the grant of the patent: **25.09.2024**
(21) Application number: 21154798.9
(22) Date of filing: 02.02.2021
(51) Int. Cl.: F24F 11/64, F24F 11/65, F24F 11/74, F24F 11/89, F24F 110/10, F24F 120/14, F24F 1/0007, F24F 11/80, F24F 11/66, F24F 11/61

(54) **APPARATUS AND METHOD FOR CONTROLLING TEMPERATURE**
VORRICHTUNG UND VERFAHREN ZUR STEUERUNG DER TEMPERATUR
APPAREIL ET PROCÉDÉ DE RÉGULATION DE TEMPÉRATURE

(30) Priority: 03.02.2020 KR 20200012514
(43) Date of publication of application: 13.10.2021
(73) Proprietor: LG Electronics Inc., Seoul 07336 (KR)
(72) Inventor: LEE, Juyoun, 08592 Seoul (KR); CHOI, Jae Heuk, 08592 Seoul (KR); LEE, Jeonghoon, 08592 Seoul (KR)
(74) Representative: Frenkel, Matthias Alexander

(56) References cited:
- EP-A1- 2 868 990
- WO-A1-2019/163881
- JP-A- 2007 132 581
- JP-A- 2017 215 131
- JP-A- 2019 100 621
- US-A1- 2015 233 598

## Description

### BACKGROUND

### 1. Field of the Disclosure

The present invention relates to a temperature control apparatus and method.

### 2. Description of Related Art

Air conditioners may discharge cold and hot air into an indoor space to adjust an indoor temperature and may purify an indoor air to provide a pleasant indoor environment. The air conditioner may efficiently operate in the indoor space with the air conditioner where occupants are present compared to an outdoor space. Therefore, the operation of the air conditioner may be controlled based on presence or absence of the occupants. The air conditioner may also operate even when users take a sleep to provide a comfortable sleep to users.

The air conditioner in related art may only operate based on a temperature preset by the user and the user may not automatically adjust the temperature of the air conditioner during sleep.

### SUMMARY OF THE INVENTION

The present invention is to detect that a user is in a sleep state to control a temperature of an air conditioner.

The present invention is also to automatically control the temperature of the air conditioner according to whether the user's sleep state is a deep sleep state or a rapid eye movement (REM) sleep state.

The present invention is also to determine movement of users by a vision camera and determine whether the user is currently in a deep sleep sate or the REM sleep state based on the determination result to control the temperature of the air conditioner.

The objects of the present invention are not limited to the above-mentioned objects, and other objects and advantages of the present disclosure which are not mentioned may be understood by the following description and more clearly understood based on the embodiments of the present disclosure. It will also be readily understood that the objects and the advantages of the present disclosure can be implemented by features defined in claims and a combination thereof.

According to the present invention, a temperate control apparatus detects that the user is in a sleep state to control the temperature of the air conditioner.

According to the present invention, the temperature control apparatus may also automatically control the temperature of the air conditioner based on determination whether the user's sleep state is the deep sleep state or the REM sleep state.

According to the present invention, the temperature control apparatus may also determine the movement of the user by the vision camera and determine whether the user is currently in the deep sleep state or the REM sleep state based on the determination results to control the temperature of the air conditioner.

According to an embodiment of the present invention, there is provided an air conditioner comprising the features of claim 1.

In addition, according to an embodiment of the present invention, there is provided a method for controlling a temperature by an air conditioner comprising the features of claim 11.

Further preferred embodiments of the invention are provided in the dependent claims.

Hereafter, further effects of the present disclosure, in addition to the above-mentioned effect, is described together while describing specific matters for implementing the present disclosure.

### BRIEF DESCRIPTION OF THE DRAWINGS

FIG. 1 is an exemplary view showing example appearance of an air conditioner.
FIG. 2A is an exemplary view showing a discharger to discharge air from an air conditioner.
FIG. 2B is an exemplary view showing an example blower to blow air by inhaling air in an air conditioner.
FIG. 3 is a block diagram showing an example temperature control apparatus of an air conditioner 100.
FIG. 4 is an exemplary view showing an example indoor space divided with a plurality of virtual areas.
FIG. 5 is a flowchart showing an example method for controlling a temperature.
FIG. 6 is a flowchart showing an example method for controlling a temperature by a temperature control apparatus.
FIG. 7 is an exemplary view showing example changes in temperature controlled by a temperature control apparatus.
FIG. 8A is an exemplary view showing example activity amount of an object in a sleep state greater than a predetermined magnitude.
FIG. 8B is an exemplary view showing an example activity amount of an object in a sleep state less than a predetermined magnitude.
FIG. 8C is an exemplary view showing an object in a sleep state with no activity amount.
FIG. 8D is an exemplary view showing an example subject getting out of the bed.
FIG. 8E is an exemplary view showing an example subject leaving a bed.

### DETAILED DESCRIPTION OF EXEMPLARY IMPLEMENTATIONS

Some embodiments of the present invention will be described in detail with reference to the accompanying drawings, such that those skilled in the art to which the present disclosure pertains may easily implement the technical idea of the present disclosure. In the description of the present disclosure, a detailed description of the known technology relating to the present disclosure may be omitted if it unnecessarily obscures the gist of the present disclosure. Hereinafter, one or more embodiments of the present disclosure will be described in detail with reference to the accompanying drawings. Same reference numerals can be used to refer to same or similar component in the figures.

In some examples, terms such as first, second, and the like may be used herein when describing elements of the present disclosure, but the elements are not limited to those terms. These terms are intended to distinguish one element from other elements, and the first element may be a second element unless otherwise stated.

In this document, the terms "upper," "lower," "on," "under," or the like are used such that, where a first component is arranged at "an upper portion" or "a lower portion" of a second component, the first component may be arranged in contact with the upper surface (or the lower surface) of the second component, or another component may be disposed between the first component and the second component. Similarly, where a first component is arranged on or under a second component, the first component may be arranged directly on or under (in contact with) the second component, or one or more other components may be disposed between the first component and the second component.

Further, the terms "connected," "coupled," or the like are used such that, where a first component is connected or coupled to a second component, the first component may be directly connected or able to be connected to the second component, or one or more additional components may be disposed between the first and second components, or the first and second components may be connected or coupled through one or more additional components.

Unless otherwise stated, each component may be singular or plural throughout the disclosure.

As used herein, the singular forms "a," "an" and "the" are intended to include the plural forms as well, unless the context clearly indicates otherwise. In the present disclosure, it should not be construed that terms such as "including" or "comprising" necessarily include various types of components or various steps described in the present disclosure, and it should be construed terms such as "including" or "comprising" do not include some components or some steps or may include additional components or steps.

In the present disclosure, unless otherwise stated, "A and/or B" means A, B or A and B. Unless otherwise stated, "C to D" means "C or more and D or less".

Hereinafter, a temperature control apparatus and method according to some embodiments of the present disclosure are described in detail.

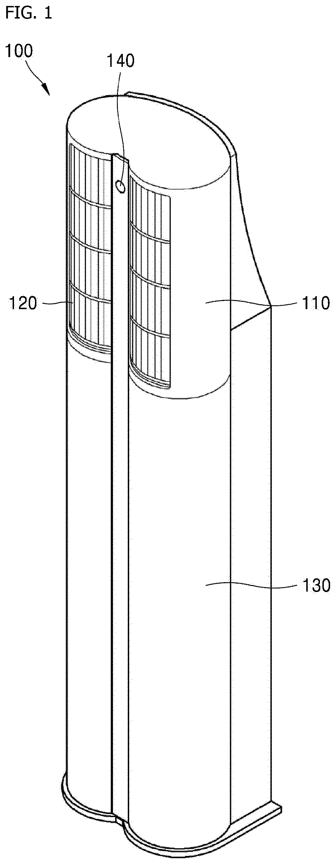

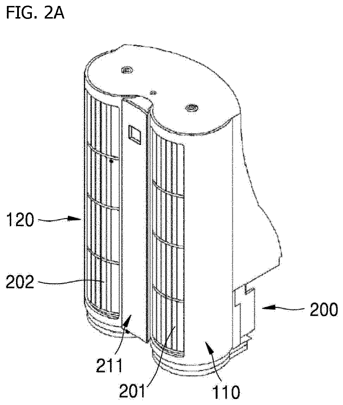

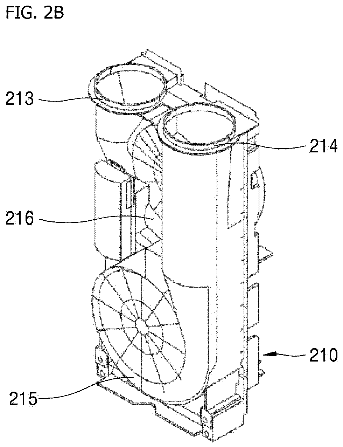

FIG. 1 is an exemplary diagram showing example appearance of an air conditioner. FIG. 2A is an exemplary view showing an example discharger configured to discharge air from an air conditioner. FIG. 2B is an exemplary view showing a blower configured to blow air by inhaling air in an air conditioner.

Referring to FIGS. 1, 2A and 2B, according to an embodiment of the present disclosure, an air conditioner 100 may include a discharger 200 (FIG. 2A) to discharge air which is introduced from outside and heat-exchanged and a blower 210 (FIG. 2B) to suction and blow air.

According to an embodiment, the discharger 200 and the blower 210 may each be disposed in a case to define appearance of the air conditioner 100, the discharger 200 may be disposed at an upper portion thereof and the blower 210 may be disposed at a lower portion thereof. For air circulation, the case 130 may also provide a suction inlet at a rear surface of the case 130 to provide air supplied from outside to the blower 210. The discharger 200 may include a first discharger 110 and a second discharger 120 to discharge air introduced from the blower 210. The first discharger 110 and the second discharger 120 may each have a cylindrical shape and may each rotate about central axes parallel to each other.

According to an embodiment, the first discharger 110 and the second discharger 120 may rotate independently of each other to adjust a discharge direction of air. For example, the first discharger 110 and the second discharger 120 may discharge the air in the same direction and may discharge the air in different directions. The first discharger 110 and the second discharger 120 may each define a closed portion at an upper portion thereof and an opening at a lower portion thereof. In this example, the air blown from the blower 210 may be introduced through a lower portion of each of the first discharger 110 and the second discharger 120. According to an embodiment, the first discharger 110 and the second discharger 120 may each provide discharge outlets to discharge air into an indoor space. In some examples, the first discharger 110 may define a first discharge outlet 201 and the second discharger 120 may define a second discharge outlet 202. In this example, air introduced from the blower 210 may be discharged into the indoor space through the discharge outlets.

The discharger 200 may further include a center body 211 between the first discharger 110 and the second discharger 120. The center body 211 may block a gap between the first discharger 110 and the second discharger 120 from outside. In this case, the center body 211 may include a display indicating an operation state of the air conditioner 100.

Referring back to FIGS. 2A and 2B, the blower 210 may include at least one blowing fan to forcibly convect air. For example, the blower 210 may include a blowing fan 215 and a second blowing fan 216 operated independently of each other. The first blowing fan 215 and the second blowing fan 216 may be operated together as necessary or at least one of the first blowing fan 215 or the second blowing fan 216 may be operated.

The first blowing fan 215 may be communicated with the first discharger 110 by a first duct 214 and the second blowing fan 216 may be communicated with and the second discharger 120 by a second duct 213. In this example, the air blown by the first blowing fan 215 may move to the first discharger 110 through the first duct 214 to be discharged to the indoor space through the discharge outlet 201. Similarly, the air blown by the second blowing fan 216 may be moved to the second discharger 120 through the second duct 213 to be discharged to the inner space through the second discharge outlet 202.

In some examples, a heat exchanger may be disposed between the blowing fan 210 and the suction inlet disposed at the rear surface of the case 130 to exchange air with refrigerant.

In some cases where the air conditioner 100 operates in a cooling mode, the air introduced from the outside through the suction inlet is cooled by a heat exchanger during the operation of the air blower 210 and the cooled air may be discharged to the inner space through the discharger 200. In some cases where the air conditioner 100 is operated in a heating mode, the air introduced from the outside through the suction inlet is heated by the heat exchanger during the operation of the blower 210 and the heated air may be discharged to the inner space through the discharger 200.

The structure of the air conditioner 100 described above with reference to FIGS. 1, 2A, and 2B is merely an example structure to perform an operation described below and the air conditioner 100 of the present disclosure may have various shapes in addition to the structure shown in the drawings.

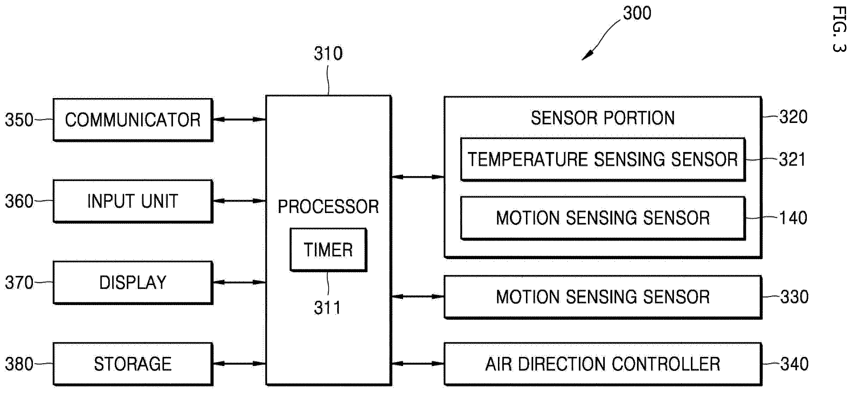

FIG. 3 is a block diagram showing an example temperature control apparatus of an air conditioner 100.

Referring to FIG. 3, according to an embodiment of the present disclosure, a temperature control apparatus 300 includes a sensor portion 320, an air volume controller 330, a wind direction controller 340, and a processor 310 including a timer 311. The control components of the temperature control apparatus 300 shown in FIG. 3 is according to an embodiment, the components of the temperature control apparatus 300 are not limited to the embodiment shown in FIG. 3, and some components may be added, changed, or omitted as necessary. In addition, the air conditioner 100 or various types of electronic products (e.g., TVs, ventilation systems, fans, and refrigerators) disposed in a space (e.g., a sofa, a desk, and the like) where people may sleep may include the temperature control apparatus 300 to operate the temperature control apparatus 300.

According to an embodiment, an input unit 360 receives, from users, data related to the operation of the air conditioner 100, for example, data related to operation setting, an operation mode, a temperature, air volume, a wind direction, and the like, and provides the processor 310 with the data. In this example, the input unit 360 may include a physical manipulation member such as a switch and a button or an electrical manipulation member such as a touch key, a touch pad, and a touch screen.

For example, the input unit 360 may receive data related to an operation mode (e.g., a rapid mode, a comfortable mode, a human body adaptation mode, and the like, described below) from a user and may provide the processor 310 with the data related to the operation mode. Further, the processor 310 may drive the air conditioner 100 in an operation mode corresponding to data input from the user.

For example, the processor 310 may detect the indoor environment by itself according to a method described below and may drive the air conditioner 100 in a customized operation mode. In addition, the processor 310 may drive the air conditioner 100 in each operation mode based only on the data related to the operation mode input from the user.

According to an embodiment, the communicator 350 may perform a wired or wireless data communication function. For example, the communicator 350 may perform data communication with an outdoor unit or data communication with another air conditioner (e.g., an indoor unit). In addition, the communicator 350 may communicate with various types of data communication apparatus (e.g., a TV, a ventilation system, a fan, a refrigerator, and the like). The communicator 350 may receive, from the various types of apparatus, signals for controlling the temperature of the air conditioner 100.

According to an embodiment, the display 370 may display various pieces of operation state information regarding the operation state of the air conditioner 100 and may be provided on an outer surface of the air conditioner 100 (e.g., the center body 211 of FIG. 2A).

According to an embodiment, the storage 380 may store information, data, and programs used to operate the air conditioner 100. In some examples, the storage 380 may store information on a human body adaptation time, an activity amount, and a virtual area described below in advance. In this example, the processor 310 may perform a control operation described below with reference to the information stored in the storage 380. The storage 380 may store a program for signal processing and controlling in the processor 310 and may store a signal-processed image, audio, or data signal. The storage 380 may store various platforms. The storage 380 may include at least one of a flash memory type storage medium, a hard disk type storage medium, a multimedia card micro type storage medium, or a card type memory (e.g., secure digital (SD) or eXtreme Digital (XD) memory, and the like), random-access memory (RAM), or read-only memory (ROM) (e.g., electrically erasable and programmable read only memory (EEPROM)).

According to an embodiment, the air volume controller 330 may control the amount of air discharged through the first discharger 201 and the second discharger 202. For example, the air volume controller 330 may adjust a number of rotations of the blowing fan based on a control signal provided by the processor 310 and may control the amount of air discharged through the first discharger 201 and the second discharger 202.

According to an embodiment, the wind direction controller 340 may adjust an angle of the first discharger 110 to control a first direction of air discharged through the first discharger 201 and may adjust an angle of the second discharger 120 to control a second direction of air discharged through the second discharger 202. For example, the wind direction controller 340 may adjust a rotation angle of the first discharger 110 and/or the second discharger 120 or the angle of the first discharge outlet 201 and/or the second discharge outlet 202 based on the control signal provided by the processor 310 to control the direction of the air discharged through the first discharger 201 and/or the second discharger 202. For example, the wind direction controller 340 may adjust an angle of the first discharger 110 and/or the second discharger 120 toward occupants under the control of the processor 310 based on the occupant detected by a motion sensing sensor 140 described below.

According to an embodiment, the temperature measurement sensor 321 may include a plurality of temperature sensors. In addition, the temperature measurement sensor 321 uses the temperatures sensors to detect a temperature of the air discharged by the air conditioner 100, a temperature of the air suctioned into the air conditioner 100, a temperature of the indoor space, a temperature of a pipe to suction the refrigerant, a temperature of pipe to discharge the refrigerant and to provide the processor 310 with the detected result. The temperature measurement sensor 321 may include a camera to measure a temperature (e.g., an infrared camera and a thermal imaging camera).

According to an embodiment, the motion sensing sensor 140 may detect the occupants within the indoor space where the air conditioner 100 is installed. The motion sensing sensor 140 may be disposed to be rotatable on an outer surface of the air conditioner 100. The motion sensing sensor 140 may detect a user taking a sleep in the indoor space where the air conditioner 100 is installed. The motion sensing sensor 140 may scan the indoor space by rotating under the control of the processor 310 and may detect the occupants located within the indoor space. The motion sensing sensor 140 may detect occupants through various methods. For example, the motion sensing sensor 140 may detect the occupants using infrared rays. The motion sensing sensor 140 may also detect the occupants using radiant heat emitted from the occupant and may detect the occupants by using a camera. The motion sensing sensor 140 may include a vision sensor. In addition, the motion sensing sensor 140 may detect the occupants through various methods of identifying human body (e.g., the occupant).

The detection operation of the motion sensing sensor 140 may be performed every preset detection period (e.g., for 10 seconds) and the motion sensing sensor 140 may provide a processor 310 described below with detection information on the detection of the occupant.

According to an embodiment, the processor 310 may acquire an amount of activity of the occupant based on a location of the occupant detected by the motion sensing sensor 140. In addition, the processor may include at least one circuit (or a processor) to control the temperature of the air conditioner 100 based on the acquisition result. The activity amount is a parameter indicating a degree of movement of the occupant and may be determined based on a movement distance of the occupant or a parameter proportional to the movement distance of the occupant. The processor 310 may identify changes in location of the occupant based on the location of the occupant detected at every detection time period and may acquire an amount of activity of the occupant based on the changes in the location of the occupant. In some examples, the processor 310 may identify the location of the occupant detected by the motion sensing sensor 140 and acquire the activity amount of the occupant based on the amount of changes in occupant's location during a reference time period.

According to an embodiment, the processor 310 may detect the movement of the occupant when the air conditioner 100 is operated based on the first temperature in a sleep control mode. In addition, based on the amount of movement of the occupant being less than a predetermined amount and the operation time period of the air conditioner 100 at the first temperature being exceeding a first threshold time period, the processor 310 may control the air volume controller to operate the air conditioner based on a second temperature. In addition, the processor 310 may control the air volume controller to operate the air conditioner based on the first temperature based on an operation time period of the air conditioner 100 at the second temperature being exceeding the second threshold time period.

According to an embodiment, the processor 310 controls the air conditioner to alternately operate at the first temperature and the second temperature for a predetermined total operation time period. The processor 310 may increase the second threshold time period at the second temperature by a predetermined time based on an elapse of time while the air conditioner is alternately operating based on the first temperature and the second temperature,.

According to an embodiment of the present disclosure, the processor 310 may determine whether an operation time period of the air conditioner at the first temperature exceeds a third threshold time based on the operation time period of the air conditioner at the second temperature being exceeding the second threshold time period. The processor 310 may control the air volume controller to operate the air conditioner based on the second temperature when the operation time period of the air conditioner at the first temperature exceeds the third threshold time period. In addition, the first threshold time period may be greater than the third threshold time period and the second threshold time period may be less than the third threshold time period. In addition, the processor 310 may determine whether the operation time period of the air conditioner at the second temperature exceeds a fourth threshold time period based on the operation time period of the air conditioner at the first temperature being exceeding the third threshold time period. Based on the operation time period of the air conditioner at the second temperature being exceeding a fourth threshold time period, the processor 310 may control the air volume controller to operate the air conditioner based on the first temperature. The fourth threshold time period may be greater than the second threshold time period.

The processor 310 may control the temperature of the air conditioner 100 based on the movement of the occupant.

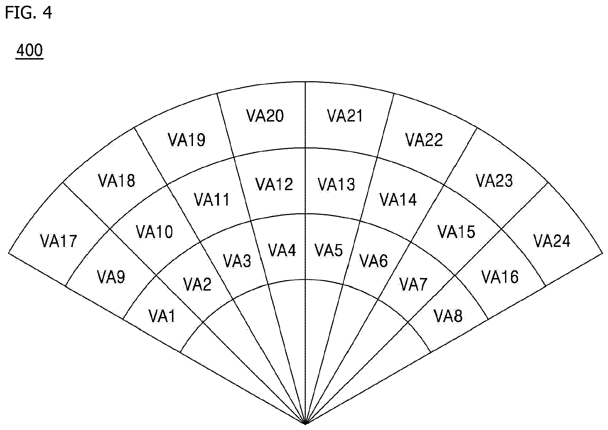

FIG. 4 is an exemplary view showing an example indoor space divided with a plurality of virtual areas.

Referring to FIG. 4, a processor 310 may map a location of an occupant detected by a motion sensing sensor 140 to a virtual area 400 that divides the indoor space and may detect movement of the occupant based on a distance between the mapped virtual areas.

The virtual area 400 may include identifiers VA1 to VA24 according to its location and information on the virtual area 400 and the identifier may be stored in the storage 380 in advance.

The processor 310 may identify the location of the occupant detected by the motion sensing sensor 140 and may map the identified location to the virtual area 400. In some examples, the processor 310 may map the location of the occupant detected during the detection period to the virtual area 400 at every detection period.

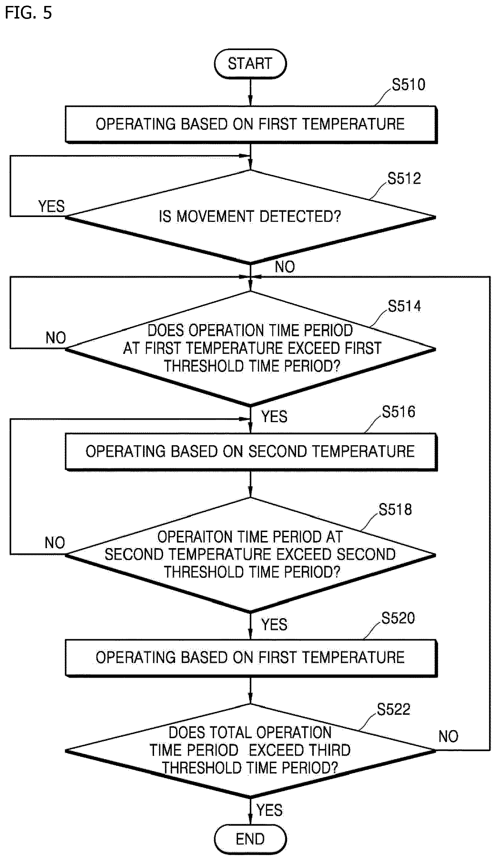

FIG. 5 is a flowchart showing the method for controlling a temperature.

Hereinafter, a method for controlling a temperature according to an embodiment of the present invention is described in detail with reference to FIG. 5. According to various embodiments of the present disclosure, components (e.g., at least one processor, a memory, a sensor portion, and the like) of an air conditioner 100 may control the temperature. Alternatively, components (e.g., at least one processor, a memory, and a sensor) of various electronic products (e.g., TVs, ventilation systems, fans, refrigerators, and the like) located in a space where a person may sleep (e.g., a sofa, a desk, and the like) may control the temperature.

According to an embodiment, a processor 310 operates the air conditioner based on a first temperature (S510). The processor 310 may operate the air conditioner 100 to approach an indoor temperature of the area (e.g., the room, the living room, and the like) where the air conditioner 100 is located to the first temperature. The processor 310 may periodically check the indoor temperature during the operation of the air conditioner 100 to determine whether the indoor temperature reaches the first temperature. In addition, the processor 310 may activate a human body sensing mode to detect an object (e.g., a person) in an area (e.g., the room, the living room, and the like) where the air conditioner 100 is located. The processor 310 may activate the motion sensing sensor 140 to operate the air conditioner in the human body sensing mode. In addition, when a current time is a time to sleep (e.g., after 9 p.m.), the processor 310 may activate a sleep control mode. Alternatively, the processor 310 may activate at least one of the sleep control mode or the human body sensing mode based on the motion sensing sensor 140 (e.g., a vision camera) detecting that the object (e.g., a person) lies on the bed.

According to an embodiment, the processor 310 determines whether the movement of the object is detected (S512). The processor 310 determines whether the object is currently moving or not moving by using the motion sensing sensor 140. The processor 310 may determine that the object may not move by using the vision camera of the motion sensing sensor 140 and may determine that the object slightly moves. For example, the processor 310 may determine that the object does not move based on the detection of the insignificant movement of the object. The processor 310 may determine whether the object is currently taking a deep sleep, or is taking a non-deep sleep (e.g., the REM sleep), or is not taking a sleep based on the degree of movement of the object (e.g., the person).

According to an embodiment, the processor 310 determines whether the operation time period of the air conditioner at the first temperature exceeds a first threshold time period (S514). The processor 310 determines whether a time period for which the air conditioner 100 operates to approach the indoor temperature (e.g., the room and the living room) where the air conditioner 100 is disposed to the first temperature exceeds the first threshold time period. The processor 310 may periodically measure the time period for which the air conditioner 100 operates when the indoor temperature is the first temperature.

According to an embodiment, the processor 310 operates the air conditioner based on the second temperature (S516). Based on the operation time period of the air conditioner at first the temperature being exceeding the first threshold time period, the processor 310 operates the air conditioner 100 to approach an indoor temperature of the area where the air conditioner 100 is disposed (e.g., the room, the living room, and the like) to a second temperature. When the operation time period of the air conditioner at the first temperature exceeds the first threshold time period, the processor 310 controls the air volume controller 330 to operate the air conditioner 100 based on the second temperature. The processor 310 may periodically check the indoor temperature during the operation of the air conditioner 100 to determine the indoor temperature reaches the second temperature. The first temperature may be higher than the predetermined second temperature.

According to an embodiment, the processor 310 determines whether the operation time period of the air conditioner at the second temperature exceeds a second threshold time period (S518). The processor 310 determines whether a time period for which the air conditioner 100 operates to approach the indoor temperature of the area where the air conditioner 100 is disposed (e.g., the room, the living room, and the like) to a second temperature exceeds a second threshold time period. The processor 310 may periodically measure the time period for which the air conditioner 100 operates when the indoor temperature is the second temperature.

According to an embodiment, the processor 310 operates the air conditioner based on the first temperature (S520). Based on the operation time period of the air conditioner at the second temperature being exceeding the second threshold time period, the processor 310 operates the air conditioner 100 to approach the inner temperature of the area where the air conditioner 100 is disposed (e.g., the room, the living room, and the like) to the first temperature. When the operation time period of the air conditioner at the second temperature exceeds the second threshold time period, the processor 310 controls the air volume controller 330 to operate the air conditioner 100 based on the first temperature. The processor 310 may periodically check the indoor temperature during operation of the air conditioner 100 and may determine whether the indoor temperature reaches the first temperature.

According to an embodiment, the processor 310 may determine whether a total operation time period exceeds the third threshold time period (S522). The processor 310 may determine the total operation time period for which the air conditioner 100 is operated when the air conditioner is operated in a human body sensing mode. The processor 310 may determine whether the determined total operation time period exceeds a third threshold time period. For example, based on the identified total operation time period being exceeding the third threshold time period, the processor 310 may deactivate at least one of the human body sensing mode or the sleep control mode.

For example, based on the determined total operation time period not exceeding the third threshold time period, the process goes back to S514 to determine the operation time period of the air conditioner at the first temperature exceeds the first threshold time period. Based on the movement of the object not detected at S512, the processor 310 may operate the air conditioner 100 based on each temperature for a predetermined threshold time period to approach the inner temperature to the first temperature or the second temperature. The processor 310 alternately operates the air conditioner 100 at the first temperature and the second temperature for a predetermined total operation time period. The processor 310 may increase the second threshold time period at the second temperature by a predetermined time period based on an elapse of time during alternate operation of the air conditioner based on the first temperature and the second temperature.

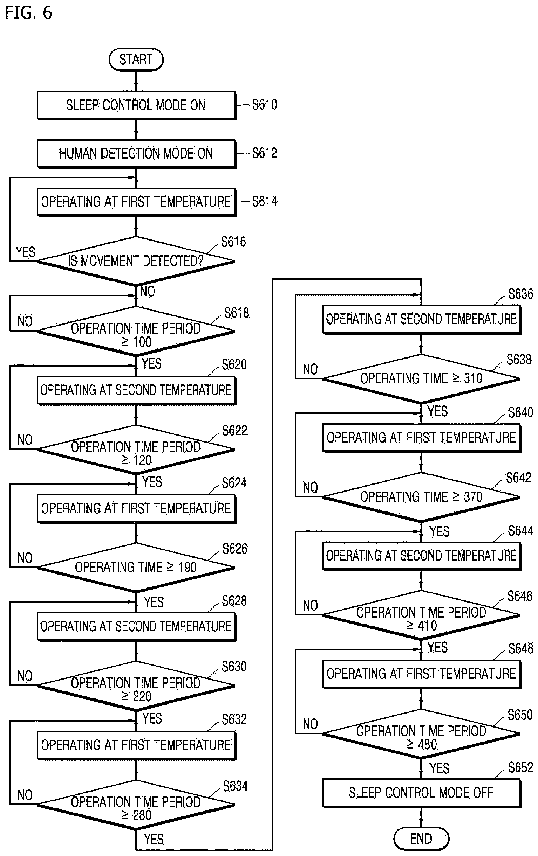

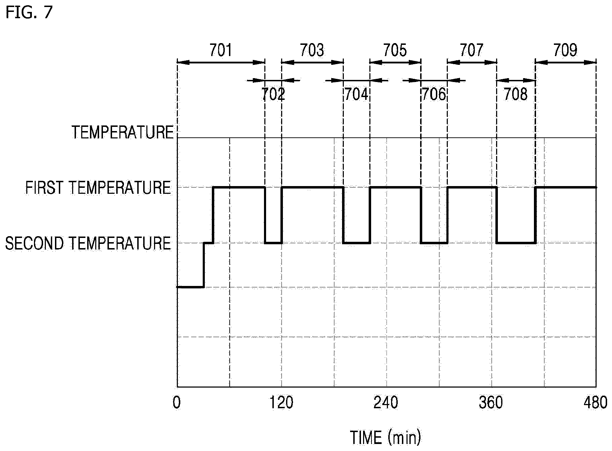

FIG. 6 is a flowchart showing an example method for controlling a temperature by a temperature control apparatus. FIG. 7 is an exemplary view showing example changes in temperature controlled by a temperature control apparatus.

Hereinafter, a method for controlling the temperature by the temperature control apparatus according to another embodiment of the present disclosure is described in detail with reference to FIGS. 6 and 7.

According to an embodiment, a processor 310 may activate a sleep control mode (S610). The processor 310 may activate the sleep control mode based on the an input to control sleep receiving from a user. According to an embodiment, the processor 310 may activate the sleep control mode when the motion sensing sensor 140 (e.g., a vision camera) determines that an object (e.g., a person) lies on the bed.

According to an embodiment, the processor 310 may activate a human body sensing mode (S612). The processor 310 may activate the human body sensing mode based on an input for detecting the human body being received from a user. According to an embodiment, the processor 310 may activate the human body sensing mode based on determination that the object (e.g., the person) lies on the bed, by the motion sensing sensor 140 (e.g., the vision camera). According to an embodiment, after the sleep control mode is activated, the human body sensing mode may be activated. After the human body sensing mode is activated, the sleep control mode may be activated. Alternatively, the human body sensing mode and the sleep control mode may be activated simultaneously.

According to an embodiment, the processor 310 may operate an air conditioner based on a first temperature (S614). The processor 310 may control cooling and heating of the air conditioner 100 to approach an indoor temperature of the area where the air conditioner 100 is located (e.g., the room, the living room, and the like) to the first temperature. The processor 310 may periodically check the indoor temperature during operation of the air conditioner 100 to determine whether the indoor temperature reaches the first temperature.

According to an embodiment, the processor 310 may detect a movement of the object (S616). The processor 310 may determine whether the object is currently moving or not by using the motion sensing sensor 140 (e.g., the vision camera). The processor 310 may determine that the object may not move by using the vision camera of the motion sensing sensor 140 and may determine that the object slightly moves. For example, when the movement of the object is insignificantly detected, the processor 310 may determine that the object does not move. The processor 310 may determine whether the object is currently taking a deep sleep, or is taking a non-deep sleep (e.g., the REM sleep), or is not taking a sleep based on the degree of the movement of the object (e.g., the person).

According to an embodiment, the processor 310 may determine whether an operation time period of the air conditioner exceeds a first threshold time period (e.g., 100 minutes) (S618). Based on the determination that the object (e.g., the person) does not move at S616 (e.g., based on the person sleeping), the processor 310 may measure a time period (e.g., an operation time period) for which cooling and heating is controlled to approach an indoor temperature of the area (e.g., the room, the living room, and the like) where the air conditioner 100 is disposed to the first temperature (or after the indoor temperature of the area reaches the first temperature). Further, the processor 310 may determine whether the measured time period exceeds the first threshold time period 701 (e.g., 100 minutes).

According to an embodiment, the processor 310 may operate the air conditioner based on a second temperature (S620). Based on the operation time period of the air conditioner at the first temperature being exceeding the first threshold time period 701, the processor 310 may control the cooling and the heating of the air conditioner 100 to approach the inner temperature of the area (e.g., the room, the living room, and the like) where the air conditioner 100 is disposed to the second temperature. Based on the operation time period of the air conditioner at the first temperature being exceeding the first threshold time period 701, the processor 310 may control an air volume controller 330 to operate the air conditioner 100 based on the second temperature. The processor 310 may periodically check the indoor temperature during the operation of the air conditioner 100 and may determine whether the periodically checked indoor temperature reaches the second temperature. The first temperature (e.g., 28 degree Celsius) may be higher than the second temperature (e.g., 27 degree Celsius) by a predetermined temperature (e.g., 1 degree Celsius).

According to an embodiment, the processor 310 may determine whether the operation time period of the air conditioner exceeds a second threshold time period (e.g., 120 minutes) (S622). The processor 310 may measure a time period 720 for which the cooling and heating is controlled (e.g., 20 minutes of operation time period) after the indoor temperature of the area (e.g., the room, the living room, and the like) where the air conditioner 100 is disposed reaches the second temperature. Alternatively, the processor 310 may measure a time period for which the air conditioner 100 operates (e.g., 120 minutes, where 120 minutes = 100 minutes at S618 + 20 minutes after reaching the second temperature). The processor 310 may also determine whether the measured time period exceeds the second threshold time period (e.g., 120 minutes).

According to an embodiment, the processor 310 may operate the air conditioner based on the first temperature (S624). Based on the operation time period of the air conditioner at the second temperature being exceeding the second threshold time period, the processor 310 may control cooling and heating of the air conditioner 100 to approach the indoor temperature of the area (e.g., the room, the living room, and the like) where the air conditioner 100 is disposed to the first temperature. When the operation time period 702 of the air conditioner at the second temperature exceeds the second threshold time period, the processor 310 may control the air volume controller 330 to operate the air conditioner 100 based on the first temperature. The processor 310 may periodically check the indoor temperature during operation of the air conditioner 100 and may determine whether the periodically checked indoor temperature reaches the first temperature.

According to an embodiment, the processor 310 may determine whether the operation time period of the air conditioner exceeds a third threshold time period (e.g., 190 minutes) (S626). The processor 310 may measure a time period 703 for which the cooling and heating is controlled (e.g., 70 minutes of operation time period) after the indoor temperature of the area (e.g., the room, the living room, and the like) where the air conditioner 100 is located reaches the first temperature (e.g., 70 minutes of operation time period). Alternatively, the processor 310 may measure a time period for which the air conditioner 100 operates (e.g., 190 minutes, where 190 minutes = 100 minutes at S618 + 20 minutes at S622 + 70 minutes at S626). In addition, the processor 310 may determine whether the measured time period exceeds the third threshold time period (e.g., 190 minutes).

According to an embodiment, the processor 310 may operate the air conditioner based on the second temperature (S628). Based on the operation time period of the air conditioner at the first temperature being exceeding the third threshold time period (e.g., 190 minutes), the processor 310 may control the cooling and heating of the air conditioner 100 to approach the indoor temperature of the area (e.g., the room, the living room, and the like) where the air conditioner 100 is disposed to the second temperature.

According to an embodiment, the processor 310 may determine whether the operation time period of the air conditioner exceeds a fourth threshold time period (e.g., 220 minutes) (S630). The processor 310 may measure a time period 704 for which the cooling and heating of the air conditioner is controlled (e.g., an operation time period of 30 minutes) after the indoor temperature of the area (e.g., the room, the living room, and the like) where the air conditioner 100 is located reaches the second temperature. Alternatively, the processor 310 may measure a time period for which the air conditioner 100 operates (e.g., 220 minutes, where 220 minutes = 100 minutes at S618 + 20 minutes at S622 + 70 minutes at S626 + 30 minutes at S630). In addition, the processor 310 may determine whether the measured time period exceeds the fourth threshold time period (e.g., 220 minutes).

According to an embodiment, the processor 310 may operate the air conditioner based on the first temperature (S632). Based on the operation time period of the air conditioner at the second temperature being exceeding the fourth threshold time period (e.g., 220 minutes), the processor 310 may control the cooling and heating of the air conditioner 100 to approach the indoor temperature of the area (e.g., the room, the living room, and the like) where the air conditioner 100 is located to the first temperature.

According to an embodiment, the processor 310 may determine whether the operation time period of the air conditioner exceeds a fifth threshold time period (e.g., 280 minutes) (S634). The processor 310 may measure a time period 705 for which the cooling and heating of the air conditioner is controlled (e.g., an operation time period of 60 minutes) after the indoor temperature of the area (e.g., the room, the living room, and the like) where the air conditioner 100 is located reaches first the temperature. Alternatively, the processor 310 may measure a time period for which the air conditioner 100 is operated (e.g., 280 minutes, where 280 minutes = 100 minutes at S618 + 20 minutes at S622 + 70 minutes at S626 + 30 minutes at S630 + 60 minutes at S634). In addition, the processor 310 may determine whether the measured time period exceeds the fifth threshold time period (e.g., 280 minutes).

According to an embodiment, the processor 310 may operate the air conditioner based on the second temperature (S636). Based on the operation time period of the air conditioner at the first temperature being exceeding the fifth threshold time period (e.g., 280 minutes), the processor 310 may control cooling and heating of air conditioner to approach the indoor temperature of the area (e.g., the room, the living room, and the like) where the air conditioner 100 is disposed to the second temperature.

According to an embodiment, the processor 310 may determine whether the operation time period of the air conditioner exceeds a sixth threshold time period of 310 minutes (S638). The processor 310 may measure a time period 706 for which the cooling and heating of the air conditioner is controlled (e.g., 30 minutes of operation time period) after the indoor temperature of the area (e.g., the room, the living room, and the like) where the air conditioner 100 is located reaches the second temperature. Alternatively, the processor 310 may measure a time period for which the air conditioner 100 is operated (e.g., 310 minutes, where 310 minutes = 100 minutes at S618 + 20 minutes at S622 + 70 minutes at S626 + 30 minutes at S630 + 60 minutes at S634 + 30 minutes at S638). Further, the processor 310 may determine whether the measured time period exceeds the sixth threshold time period of 310 minutes.

According to an embodiment, the processor 310 may operate the air conditioner based on the first temperature (S640). Based on the operation time period of the air conditioner at the second temperature being exceeding the sixth threshold time period of 310 minutes, the processor 310 may control cooling and heating of the air conditioner 100 to approach the indoor temperature of the area (e.g., the room, the living room, and the like) where the air conditioner 100 is located to the first temperature.

According to an embodiment, the processor 310 may determine whether the operation time period of the air conditioner exceeds a seventh threshold time period of 370 minutes (S642). The processor 310 may measure a time period 707 for which the cooling and heating of the air conditioner is controlled (e.g., 60 minutes of operation time period) after the indoor temperature of the area (e.g., the room, the living room, and the like) where the air conditioner 100 is located reaches the first temperature. Alternatively, the processor 310 may measure a time period for which the air conditioner 100 is operated (e.g., 370 minutes, where 370 minutes = 100 minutes at S618 + 20 minutes at S622 + 70 minutes at S626 + 30 minutes at S630 + 60 minutes at S634 + 30 minutes at S638 + 60 minutes at S642). Further, the processor 310 may determine whether the measured time period exceeds the seventh threshold time period (e.g., 370 minutes).

According to an embodiment, the processor 310 may operate the air conditioner based on the second temperature (S644). Based on the operation time period of the air conditioner at the first temperature being exceeding the seventh threshold time period of 370 minutes, the processor 310 may control the cooling and heating of the air conditioner 100 to approach the indoor temperature of the area (e.g., the room, the living room, and the like) where the air conditioner 100 is disposed to the second temperature.

According to an embodiment, the processor 310 may determine whether the operation time period of the air conditioner exceeds an eighth threshold time period of 410 minutes (S646). The processor 310 may measure a time period 708 for which cooling and heating of the air conditioner is controlled (e.g., 30 minutes of operation time period) after the indoor temperature of the area (e.g., the room, the living room, and the like) where the air conditioner 100 is located reaches the second temperature. Alternatively, the processor 310 may measure a time period for which the air conditioner 100 is operated (e.g., 410 minutes, where 410 minutes = 100 minutes at S618 + 20 minutes at S622 + 70 minutes at S626 + 30 minutes at S630 + 60 minutes at S634 + 30 minutes at S638 + 60 minutes at S642 + 40 minutes at S646). In addition, the processor 310 may determine whether the measured time period exceeds 410 minutes of eighth threshold time period.

According to an embodiment, the processor 310 may operate the air conditioner based on the first temperature (S648). Based on the operation time period of the air conditioner at the first temperature being exceeding the seventh threshold time period of 410 minutes, the processor 310 may control cooling and heating of the air conditioner 100 to approach the indoor temperature of the area (e.g., the room, the living room, and the like) where the air conditioner 100 is disposed to the first temperature.

According to an embodiment, the processor 310 may determine whether the operation time period of the air conditioner exceeds a ninth threshold time period of 480 minutes (S650). The processor 310 may measure a time period 709 for which the cooling and heating of the air conditioner is controlled (e.g., 70 minutes of operation time period) after the indoor temperature of the area (e.g., the room, the living room, and the like) where the air conditioner 100 is located reaches the first temperature. Alternatively, the processor 310 may measure a time period for which the air conditioner 100 operates (e.g., 480 minutes, where 480 minutes = 100 minutes at S618 + 20 minutes at S622 + 70 minutes at S626 + 30 minutes at S630 + 60 minutes at S634 + 30 minutes at S638 + 60 minutes at S642 + 40 minutes at S646 + 70 minutes at S650). Further, the processor 310 may determine whether the measured time period exceeds the ninth threshold time period of 480 minutes.

According to an embodiment of the present disclosure, the temperature control apparatus 300 may detect the movement of the object during the operation of the air conditioner based on the first temperature in the sleep control mode. In addition, when an amount of movement of the object is less than a predetermined amount and the operation time period of the air conditioner at the first temperature exceeds the first threshold time period, the temperature control apparatus 300 may control the air volume controller to operate the air conditioner based on the second temperature. In addition, when the operation time period of the air conditioner at the second temperature exceeds the second threshold time period, the temperature control apparatus 300 may control the air volume controller to operate the air conditioner based on the first temperature.

In addition, the temperature control apparatus 300 may control the air conditioner to alternately operate at the first temperature and the second temperature for a predetermined total operation time period. The temperature control apparatus 300 may increase the second threshold time period at the second temperature by a predetermine time period based on an elapse of time when the air conditioner alternately operates based on the first temperature and the second temperature.

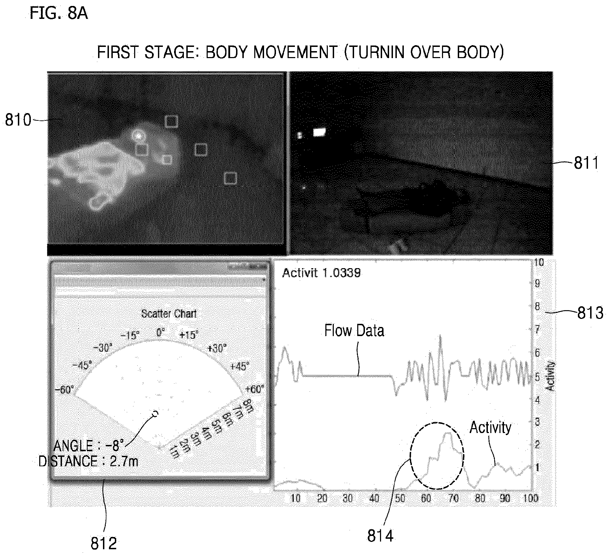

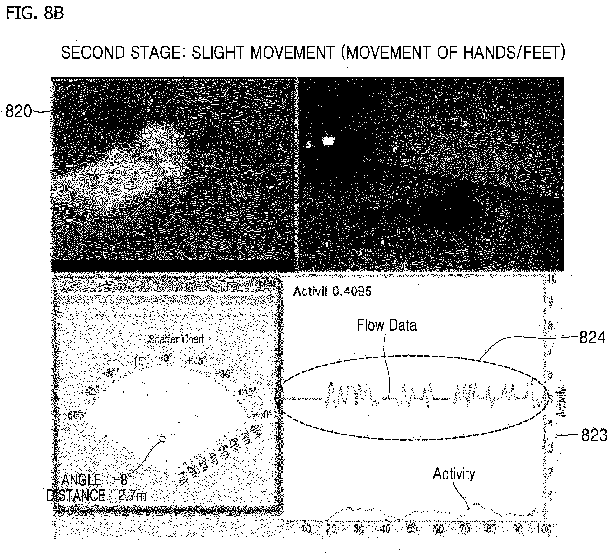

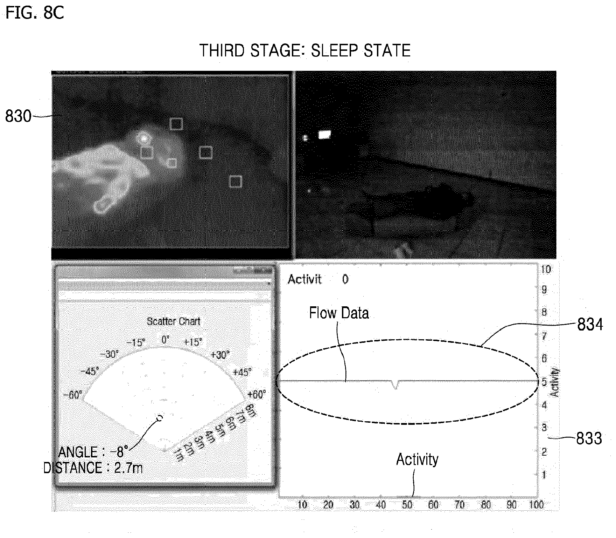

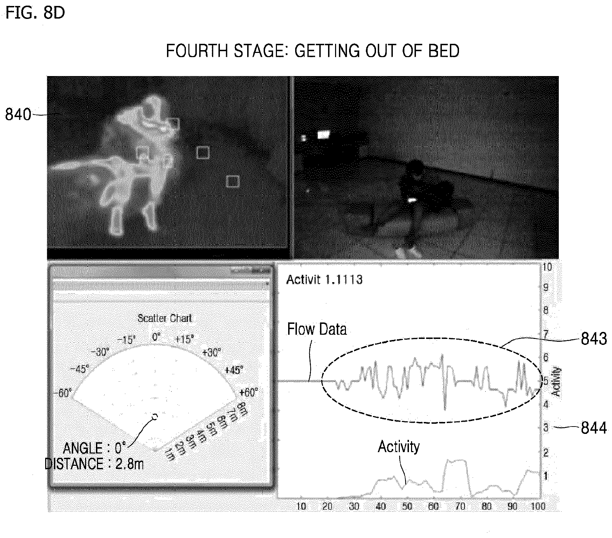

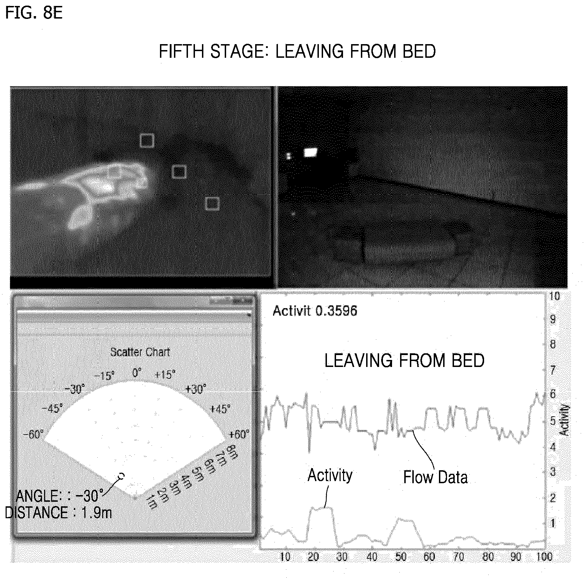

FIG. 8A is an exemplary view showing example activity amount of an object in a sleep state greater than a predetermined magnitude. FIG. 8B is an exemplary view showing example activity amount of an object in a sleep state less than a predetermined magnitude. FIG. 8C is an exemplary view showing an example subject in a sleep state having no activity. FIG. 8D is an exemplary view showing an example subject getting out of the bed. FIG. 8E is an exemplary view showing an example subject leaving the bed.

Referring to FIG. 8A, an object (e.g., a person) may lie down on the bed and turn over during sleep. According to an embodiment, the temperature control apparatus 300 may acquire a first image 810 of a person in sleep on the bed by using a temperature measurement sensor 321 (e.g., an infrared camera) and may acquire a second image 811 of a person in sleep on the bed by using a motion sensing sensor 140.

The first image 810 has a reddish color to determine a body temperature of a person turning over during sleep and the second image 811 is an image of person in sleep. A third image 812 shows an interior of the bedroom divided into a plurality of virtual areas and may indicate a place corresponding to the position of the person (e.g., a place corresponding to an angle of -8° and a distance of 2.7 m). The third image 812 may also show person's movement. A fourth image 813 corresponds to a graph showing a magnitude of a person's movement (e.g., activity amount). When the person turns over during sleep, the motion sensing sensor 140 of the temperature control apparatus 300 may detect the movement of the person turning over during sleep. The processor 310 of the temperature control apparatus 300 may graphically express an intensity of movement of the person. For example, when a person turns over during sleep as shown in the fourth image 813, the amount of activity increases (e.g., an amount of activity > 1) shown using reference numeral 814.

Referring to FIG. 8B, an object (e.g., a person) may perform a minute movement of moving his or her hands and feet during sleep on the bed. As shown in the fifth image 820, when a magnitude of a person's movement (e.g., the amount of activity) is maintained within a certain magnitude (e.g., 0 < activity amount < 1), the motion sensing sensor 140 of the temperature control apparatus 300 may detect movement of hands and feet. As shown in a sixth image 823, the processor 310 of the temperature control apparatus 300 may represent an intensity of the movement of hands or feet using a graph 824.

Referring to FIG. 8C, a person in a deep sleep may not turn over. As shown in a seventh image 830, even when the person has no movement (e.g., the activity amount) (or the person insignificantly moves), the motion sensing sensor 140 of the temperature control apparatus 300 may detect the movement of the person in deep sleep. As shown in an eighth image 833, the processor 310 of the temperature control apparatus 300 may represent the intensity of the movement of person in deep sleep using a graph 834.

Referring to FIG. 8D, a ninth image 840 shows a person sitting on the bed after sleep. As the person sits on the bed with a greater magnitude of movement (e.g., an activity amount), a tenth image 844 shows a greater magnitude of activity amount 843. In addition, referring to FIG. 8E, when the person leaves the bed after sleeping, the ninth image shows the person leaving the bed after sleep.

Steps in each of the flowcharts described above may be operated regardless of the shown sequence or may be performed simultaneously. Also, at least one component of the present disclosure and at least one operation performed by the at least one component may be implemented with hardware and/or software.

### [Description of Symbols]

| | | | |
|---|---|---|---|
| 310: | Processor | 311: | Timer |
| 320: | Sensor portion | 321: | Temperature measurement sensor |
| 330: | Air volume controller | 340: | Wind direction controller |
| 350: | Communicator | 360: | Input unit |
| 370: | Display | 380: | Storage |

## Claims

1. An air conditioner (100), comprising:
an air volume controller (300);
a sensor portion (320) configured to comprise a sensor (140) to detect movement and a sensor (321) to measure a temperature; and
at least one processor (310) configured to:
detect movement of a subject while the air conditioner (100) based on a first temperature is operating in a temperature control mode,
based on a magnitude of movement of the subject being less than a predetermined magnitude and an operation time period of the air conditioner at the first temperature being exceeding a first threshold time period, control the air volume controller (330) to operate the air conditioner based on a second temperature, and
based on an operation time period of the air conditioner (100) at the second temperature being exceeding a second threshold time period, control the air volume controller (330) to operate the air conditioner based on the first temperature,
the air conditioner being **characterized in that**
the at least one processor (310) is further configured to:
alternately operate the air conditioner (100) based on the first temperature and the second temperature for a predetermined total operation time period.

2. The air conditioner of claim 1, wherein the at least one processor (310) is configured to:
increase the second threshold time period at the second temperature by a predetermined time period based on an elapse of time while the air conditioner (100) is alternately operating based on the first temperature and the second temperature.

3. The air conditioner of claim 1 or 2,
wherein the at least one processor (310) is configured to, when the operation time period of the air conditioner (100) at the first temperature exceeds a third threshold time period based on the operation time period of the air conditioner at the second temperature being exceeding the second threshold time period, control the air volume controller (330) to operate the air conditioner based on the second temperature, and
wherein the first threshold time period is greater than the third threshold time period and the second threshold time period is less than the third threshold time period.

4. The air conditioner of claim 3,
wherein the at least one processor (310) is configured to, when the operation time period of the air conditioner (100) at the second temperature exceeds a fourth threshold time period based on the operation time period of the air conditioner at the first temperature being exceeding the third threshold time period, control the air volume controller (330) to operate the air conditioner based on the first temperature, and
wherein the fourth threshold time period is greater than the second threshold time period.

5. The air conditioner of claim 4,
wherein the at least one processor (310) is configured to, when the operation time period of the air conditioner (100) at the first temperature exceeds a fifth threshold time period based on the operation time period of the air conditioner at the second temperature being exceeding the fourth threshold time period, control the air volume controller (330) to operate the air conditioner (100) based on the second temperature, and
wherein the fifth threshold time period is less than the third threshold time period.

6. The air conditioner of claim 5,
wherein the at least one processor (310) is configured to, when the operation time period of the air conditioner (100) at the second temperature exceeds a sixth threshold time period based on the operation time period of the air conditioner at the first temperature being exceeding the fifth threshold time period, control the air volume controller (330) to operate the air conditioner based on the first temperature, and
wherein the sixth threshold time period is identical to the fourth threshold time period.

7. The air conditioner of claim 6,
wherein the at least one processor (310) is configured to, when the operation time period of the air conditioner (100) at the first temperature exceeds a seventh threshold time period based on the operation time period of the air conditioner at the second temperature being exceeding the sixth threshold time period, control the air volume controller (330) to operate the air conditioner based on the second temperature, and
wherein the seventh threshold time period is identical to the fifth threshold time period.

8. The air conditioner of claim 7,
wherein the at least one processor (310) is configured to, when the operation time period of the air conditioner (100) at the second temperature exceeds an eighth threshold time period based on the operation time period of the air conditioner at the first temperature being exceeding the seventh threshold time period, control the air volume controller (330) to operate the air conditioner based on the first temperature for a ninth threshold time period, and
wherein the eighth threshold time period is greater than the sixth threshold time period.

9. The air conditioner of claim 8, wherein the at least one processor (310) is configured to:
calculate a total sum of the first threshold time period to the ninth threshold time period, and
release the temperature control mode based on the calculated total sum exceeding a predetermined total time.

10. The air conditioner of any one preceding claim, wherein the at least one processor is configured to identify that the subject does not move based on the magnitude of movement of the subject being less than the predetermined magnitude.

11. A method for controlling a temperature by an air conditioner (100) comprising an air volume controller (330), a sensor portion (320), and at least one processor (310), the method comprising:
detecting, by the sensor portion (320), a movement of a subject while the air conditioner (100) based on a first temperature is operating in an temperature control mode;
when an a magnitude of movement of the subject is less than a predetermined magnitude and an operation time period of the air conditioner at the first temperature exceeds a first threshold time period, controlling the air volume controller (330) to operate the air conditioner (100) based on a second temperature; and
when an operation time period of the air conditioner at the second temperature exceeds a second threshold time period, controlling the air volume controller (330) to operate the air conditioner based on the first temperature,
the method being **characterized by** further comprising alternately operating the air conditioner (100) based on the first temperature and the second temperature for a predetermined total operation time period.

12. The method of claim 11, further comprising:
increasing the second threshold time period at the second temperature by a predetermined time period based on an elapse of time while the air conditioner (100) is alternately operating based on the first temperature and the second temperature.

13. The method of claim 11 or 12, further comprising, when the operation time period of the air conditioner (100) at the first temperature exceeds a third threshold time period based on the operation time period of the air conditioner at the second temperature being exceeding the second threshold time period, controlling the air volume controller (330) to operate the air conditioner based on the second temperature,
wherein the first threshold time period is greater than the third threshold time period, and the second threshold time period is less than the third threshold time period.

## Patentansprüche

1. Klimaanlage (100) umfassend:
einen Luftmengenregler (300);
einen Sensorabschnitt (320), der so eingerichtet ist, dass er einen Sensor (140) zum Erfassen einer Bewegung und einen Sensor (321) zum Messen einer Temperatur umfasst; und
zumindest einen Prozessor (310), der eingerichtet ist zum:
Erfassen einer Bewegung eines Objekts, während die Klimaanlage (100) basierend auf einer ersten Temperatur in einem Temperaturregelmodus betrieben wird,
basierend darauf, dass ein Ausmaß der Bewegung des Objekts kleiner als ein vorgegebenes Ausmaß ist und eine Betriebszeitdauer der Klimaanlage bei der ersten Temperatur eine erste Schwellenzeitdauer überschreitet, Steuern des Luftvolumenreglers (330), um die Klimaanlage basierend auf einer zweiten Temperatur zu betreiben, und
basierend darauf, dass eine Betriebszeitdauer der Klimaanlage (100) bei der zweiten Temperatur eine zweite Schwellenzeitdauer überschreitet, Steuern des Luftmengenreglers (330), um die Klimaanlage basierend auf der ersten Temperatur zu betreiben,
wobei die Klimaanlage **dadurch gekennzeichnet ist, dass**
der zumindest eine Prozessor (310) weiterhin eingerichtet ist zum:
abwechselnden Betreiben der Klimaanlage (100) basierend auf der ersten Temperatur und der zweiten Temperatur für eine vorgegebene Gesamtbetriebszeitdauer.

2. Klimaanlage nach Anspruch 1, wobei der zumindest eine Prozessor (310) eingerichtet ist zum:
Erhöhen des zweiten Schwellenzeitraums bei der zweiten Temperatur um einen vorbestimmten Zeitraum basierend auf einer verstrichenen Zeit, während die Klimaanlage (100) abwechselnd basierend auf der ersten Temperatur und der zweiten Temperatur betrieben wird.

3. Klimaanlage nach Anspruch 1 oder 2,
wobei der zumindest eine Prozessor (310) dazu eingerichtet ist, den Luftvolumenregler (330) so zu steuern, dass er die Klimaanlage basierend auf der zweiten Temperatur betreibt, wenn die Betriebszeitdauer der Klimaanlage (100) bei der ersten Temperatur eine dritte Schwellenzeitdauer überschreitet, basierend darauf, dass die Betriebszeitdauer der Klimaanlage bei der zweiten Temperatur die zweite Schwellenzeitdauer überschreitet, und
wobei der erste Schwellenzeitraum größer als der dritte Schwellenzeitraum ist und der zweite Schwellenzeitraum kleiner als der dritte Schwellenzeitraum ist.

4. Klimaanlage nach Anspruch 3,
wobei der zumindest eine Prozessor (310) dazu eingerichtet ist, den Luftvolumenregler (330) so zu steuern, dass er die Klimaanlage basierend auf der ersten Temperatur betreibt, wenn die Betriebszeitdauer der Klimaanlage (100) bei der zweiten Temperatur eine vierte Schwellenzeitdauer überschreitet, basierend darauf, dass die Betriebszeitdauer der Klimaanlage bei der ersten Temperatur die dritte Schwellenzeitdauer überschreitet, und
wobei der vierte Schwellenzeitraum größer als der zweite Schwellenzeitraum ist.

5. Klimaanlage nach Anspruch 4,
wobei der zumindest eine Prozessor (310) dazu eingerichtet ist, den Luftvolumenregler (330) so zu steuern, dass er die Klimaanlage (100) basierend auf der zweiten Temperatur betreibt, wenn die Betriebszeitdauer der Klimaanlage (100) bei der ersten Temperatur eine fünfte Schwellenzeitdauer überschreitet, basierend darauf, dass die Betriebszeitdauer der Klimaanlage bei der zweiten Temperatur die vierte Schwellenzeitdauer überschreitet, und
wobei der fünfte Schwellenzeitraum kürzer als der dritte Schwellenzeitraum ist.

6. Klimaanlage nach Anspruch 5,
wobei der zumindest eine Prozessor (310) dazu eingerichtet ist, den Luftvolumenregler (330) so zu steuern, dass er die Klimaanlage basierend auf der ersten Temperatur betreibt, wenn die Betriebszeitdauer der Klimaanlage (100) bei der zweiten Temperatur eine sechste Schwellenzeitdauer überschreitet, basierend darauf, dass die Betriebszeitdauer der Klimaanlage bei der ersten Temperatur die fünfte Schwellenzeitdauer überschreitet, und
wobei der sechste Schwellenzeitraum mit dem vierten Schwellenzeitraum identisch ist.

7. Klimaanlage nach Anspruch 6,
wobei der zumindest eine Prozessor (310) dazu eingerichtet ist, den Luftvolumenregler (330) so zu steuern, dass er die Klimaanlage basierend auf der zweiten Temperatur betreibt, wenn die Betriebszeitdauer der Klimaanlage (100) bei der ersten Temperatur eine siebte Schwellenzeitdauer überschreitet, basierend darauf, dass die Betriebszeitdauer der Klimaanlage bei der zweiten Temperatur die sechste Schwellenzeitdauer überschreitet, und
wobei der siebte Schwellenzeitraum mit dem fünften Schwellenzeitraum identisch ist.

8. Klimaanlage nach Anspruch 7,
wobei der zumindest eine Prozessor (310) dazu eingerichtet ist, den Luftvolumenregler (330) so zu steuern, dass er die Klimaanlage basierend auf der ersten Temperatur für eine neunte Schwellenzeitdauer betreibt, wenn die Betriebszeitdauer der Klimaanlage (100) bei der zweiten Temperatur eine achte Schwellenzeitdauer überschreitet, basierend darauf, dass die Betriebszeitdauer der Klimaanlage bei der ersten Temperatur die siebte Schwellenzeitdauer überschreitet, und
wobei der achte Schwellenzeitraum größer als der sechste Schwellenzeitraum ist.

9. Klimaanlage nach Anspruch 8, wobei der zumindest eine Prozessor (310) eingerichtet ist zum:
Berechnen einer Gesamtsumme des ersten Schwellenzeitraums bis zum neunten Schwellenzeitraum und
Freigeben des Temperaturregelungsmodus basierend auf der berechneten Gesamtsumme, die eine vorgegebene Gesamtzeit überschreitet.

10. Klimaanlage gemäß einem der vorhergehenden Ansprüche, wobei der zumindest eine Prozessor dazu eingerichtet ist, zu erkennen, dass sich das Objekt nicht bewegt, basierend darauf, dass das Ausmaß der Bewegung des Objekts kleiner als das vorgegebene Ausmaß ist.

11. Verfahren zum Regeln einer Temperatur durch eine Klimaanlage (100), die einen Luftmengenregler (330), einen Sensorabschnitt (320) und zumindest einen Prozessor (310) umfasst, wobei das Verfahren umfasst:
Erfassen einer Bewegung eines Objekts durch den Sensorabschnitt (320), während die Klimaanlage (100) basierend auf einer ersten Temperatur in einem Temperaturregelmodus betrieben wird,
wenn ein Ausmaß der Bewegung des Objekts kleiner als ein vorgegebenes Ausmaß ist und eine Betriebszeitdauer der Klimaanlage bei der ersten Temperatur eine erste Schwellenzeitdauer überschreitet, Steuern des Luftvolumenreglers (330), um die Klimaanlage basierend auf einer zweiten Temperatur zu betreiben; und
wenn eine Betriebszeitdauer der Klimaanlage bei der zweiten Temperatur eine zweite Schwellenzeitdauer überschreitet, Steuern des Luftmengenreglers (330), um die Klimaanlage basierend auf der ersten Temperatur zu betreiben,
wobei das Verfahren **dadurch gekennzeichnet ist, dass** es weiterhin umfasst:
abwechselndes Betreiben der Klimaanlage (100) basierend auf der ersten Temperatur und der zweiten Temperatur für eine vorgegebene Gesamtbetriebszeitdauer.

12. Verfahren nach Anspruch 11, weiterhin umfassend:
Erhöhen des zweiten Schwellenzeitraums bei der zweiten Temperatur um einen vorbestimmten Zeitraum basierend auf einer verstrichenen Zeit, während die Klimaanlage (100) abwechselnd basierend auf der ersten Temperatur und der zweiten Temperatur betrieben wird.

13. Verfahren nach Anspruch 11 oder 12, weiterhin umfassend Steuern des Luftvolumenreglers (330), um die Klimaanlage basierend auf der zweiten Temperatur zu betreiben, wenn die Betriebszeitdauer der Klimaanlage (100) bei der ersten Temperatur eine dritte Schwellenzeitdauer überschreitet, basierend darauf, dass die Betriebszeitdauer der Klimaanlage bei der zweiten Temperatur die zweite Schwellenzeitdauer überschreitet,
wobei der erste Schwellenzeitraum größer als der dritte Schwellenzeitraum ist und der zweite Schwellenzeitraum kleiner als der dritte Schwellenzeitraum ist.

## Revendications

1. Climatisation (100), comprenant:
un régulateur de volume d'air (300);
une partie capteur (320) conçue pour comprendre un capteur (140) pour détecter le mouvement et un capteur (321) pour mesurer une température; et
au moins un processeur (310) configuré pour:
détecter le mouvement d'un sujet pendant que la climatisation (100), sur la base d'une première température, fonctionne dans un mode de régulation de température,
en fonction d'une amplitude de mouvement du sujet inférieure à une amplitude prédéterminée et d'une durée de fonctionnement de la climatisation à la première température supérieure à une première durée seuil, commander le régulateur de volume d'air (330) pour faire fonctionner la climatisation en fonction d'une deuxième température, et
en fonction d'une période de fonctionnement de la climatisation (100) à la deuxième température dépassant un second seuil, amener le régulateur de volume d'air (330) à faire fonctionner la climatisation en fonction de la première température,
la climatisation étant **caractérisée en ce que** l'au moins un processeur (310) est en outre configuré pour:
faire fonctionner alternativement la climatisation (100) en fonction de la première température et de la deuxième température pendant une durée totale de fonctionnement prédéterminée.

2. Climatisation selon la revendication 1, dans laquelle l'au moins un processeur (310) est configuré pour:
augmenter le deuxième seuil de durée à la deuxième température d'une durée prédéterminée en fonction du temps écoulé pendant que la climatisation (100) fonctionne alternativement en fonction de la première et de la deuxième température.

3. Climatisation selon la revendication 1 ou 2,
dans laquelle l'au moins un processeur (310) est configuré pour, lorsque la période de fonctionnement de la climatisation (100) à la première température dépasse une troisième période de seuil basée sur la période de fonctionnement de la climatisation à la deuxième température supérieure à la seconde période de seuil, amener le régulateur de volume d'air (330) à faire fonctionner la climatisation en fonction de la deuxième température, et
dans laquelle la première période de seuil est supérieure à la troisième période de seuil et la deuxième période de seuil est inférieure à la troisième période de seuil.

4. Climatisation selon la revendication 3,
dans laquelle l'au moins un processeur (310) est configuré pour, lorsque la période de fonctionnement de la climatisation (100) à la deuxième température dépasse une quatrième période de seuil basée sur la période de fonctionnement de la climatisation à la première température supérieure à la troisième période de seuil, amener le régulateur de volume d'air (330) à faire fonctionner la climatisation sur la base de la première température, et
dans laquelle la quatrième période de temps seuil est supérieure à la deuxième période de temps seuil.

5. Climatisation selon la revendication 4,
dans laquelle au moins un processeur (310) est configuré pour, lorsque la période de fonctionnement du climatiseur (100) à la première température dépasse une cinquième période de seuil basée sur la période de fonctionnement de la climatisation à la deuxième température dépassant la quatrième période de seuil, amener le régulateur de volume d'air (330) à faire fonctionner la climatisation (100) sur la base de la deuxième température, et
dans laquelle la cinquième période de temps seuil est inférieure à la troisième période de temps seuil.

6. Climatisation selon la revendication 5,
dans laquelle l'au moins un processeur (310) est configuré pour, lorsque la période de fonctionnement de la climatisation (100) à la deuxième température dépasse une sixième période de seuil basée sur la période de fonctionnement de la climatisation à la première température dépassant la cinquième période de seuil, amener le régulateur de volume d'air (330) à faire fonctionner la climatisation sur la base de la première température, et
dans laquelle la sixième période de temps seuil est supérieure à la quatrième période de temps seuil.

7. Climatisation selon la revendication 6,
dans laquelle l'au moins un processeur (310) est configuré pour, lorsque la période de fonctionnement de la climatisation (100) à la première température dépasse une septième période de seuil basée sur la période de fonctionnement de la climatisation à la deuxième température supérieure à la seconde période de seuil, amener le régulateur de volume d'air (330) à faire fonctionner la climatisation en fonction de la deuxième température, et
dans laquelle la septième période de temps seuil est identique à la cinquième période de temps seuil.

8. Climatisation selon la revendication 7,
dans laquelle l'au moins un processeur (310) est configuré pour, lorsque la période de fonctionnement de la climatisation (100) à la deuxième température dépasse un huitième seuil de temps sur la base de la période de fonctionnement de la climatisation à la première température dépassant le septième seuil de temps, amener le régulateur de volume d'air (330) à faire fonctionner la climatisation sur la base de la première température pendant un neuvième seuil de temps, et
dans laquelle la huitième période de temps seuil est supérieure à la sixième période de temps seuil.

9. Climatisation selon la revendication 8, dans laquelle l'au moins un processeur (310) est configuré pour:
calculer une somme totale de la première période de temps seuil à la neuvième période de temps seuil, et
libérer le mode de régulation de la température si la somme totale calculée dépasse une durée totale prédéterminée.

10. Climatisation selon l'une quelconque revendication précédente, dans laquelle l'au moins un processeur est configuré pour identifier que le sujet ne se déplace pas sur la base de l'amplitude du mouvement du sujet qui est inférieure à l'amplitude prédéterminée.

11. Procédé de régulation d'une température par une climatisation (100) comprenant un régulateur de volume d'air (330), une partie capteur (320), et au moins un processeur (310), le procédé comprenant:
Détecter, par la partie capteur (320), un mouvement d'un sujet pendant que la climatisation (100), sur la base d'une première température, fonctionne dans un mode de régulation de température,
lorsqu'une amplitude de mouvement du sujet est inférieure à une amplitude prédéterminée et d'une durée de fonctionnement de la climatisation à la première température dépasse à une première durée seuil, amener le régulateur de volume d'air (330) à faire fonctionner la climatisation en fonction d'une deuxième température; et
lorsqu'une période de fonctionnement de la climatisation (100) à la deuxième température dépassant un second seuil, amener le régulateur de volume d'air (330) à faire fonctionner la climatisation en fonction de la première température,
le procédé étant **caractérisé en ce qu'**il comprend en outre le fonctionnement alternatif de la climatisation (100) en fonction de la première température et de la deuxième température pendant une durée totale de fonctionnement prédéterminée.

12. Procédé selon la revendication 11, comprenant en outre:
l'augmentation du deuxième seuil de durée à la deuxième température d'une durée prédéterminée en fonction du temps écoulé pendant que la climatisation (100) fonctionne alternativement en fonction de la première et de la deuxième température.

13. Procédé selon la revendication 11 ou 12, comprenant en outre lorsque la période de fonctionnement de la climatisation (100) à la première température dépasse une troisième période de seuil basée sur la période de fonctionnement de la climatisation à la deuxième température supérieure à la seconde période de seuil, amener le régulateur de volume d'air (330) à faire fonctionner la climatisation en fonction de la deuxième température,
dans laquelle la première période de seuil est supérieure à la troisième période de seuil et la deuxième période de seuil est inférieure à la troisième période de seuil.
